Europäisches Patentamt

European Patent Office

Office européen des brevets

(19)

(11)     **EP 0 752 114 B1**

(12)     **FASCICULE DE BREVET EUROPEEN**

(45) Date de publication et mention
de la délivrance du brevet:
**19.04.2000   Bulletin 2000/16**

(51) Int Cl.⁷: $G01V\ 1/00$

(21) Numéro de dépôt: **96901406.7**

(22) Date de dépôt: **17.01.1996**

(86) Numéro de dépôt international:
**PCT/FR96/00076**

(87) Numéro de publication internationale:
**WO 96/23234 (01.08.1996 Gazette 1996/35)**

(54) **METHODE D'EXPLORATION D'UN MILIEU A TECTONIQUE COMPLEXE**

VERFAHREN ZUR UNTERSUCHUNG EINES MEDIUMS MIT KOMPLEXER TEKTONIK

METHOD FOR EXPLORING A TECTONICALLY COMPLEX MEDIUM

(84) Etats contractants désignés:
**FR GB IT NL**

(30) Priorité: **23.01.1995  FR 9500730**

(43) Date de publication de la demande:
**08.01.1997   Bulletin 1997/02**

(73) Titulaire: **ELF AQUITAINE PRODUCTION
92400 Courbevoie (FR)**

(72) Inventeur: **DE BAZELAIRE, Eric
F-64230 Lescar (FR)**

(74) Mandataire: **Levy, David et al
c/o S.A. Fédit-Loriot
38, avenue Hoche
75008 Paris (FR)**

(56) Documents cités:
**FR-A- 2 296 857          FR-A- 2 648 562
FR-A- 2 703 469**

• **GEOPHSICS, vol. 38, no. 4, Août 1973, TULSA,
OK, USA, pages 643-656, XP002002207 P.M.
SHAH ET AL: "Gross properties of time-distance
curves" cité dans la demande**
• **GEOPHYSICS, vol. 53, no. 2, Février 1988,
TULSA, OK, USA, pages 143-157, XP002002208
E. DE BAZELAIRE: "Normal moveout revisited:
inhomogeneous media and curved interfaces"
cité dans la demande**

**Description**

En exploration géophysique, les spécialistes cherchent à définir la géométrie notamment des pièges stratigraphiques et/ou des pièges structuraux. Dans le premier cas, le problème consiste à accroître la précision des mesures de temps et de courbure des réflecteurs sismiques. Dans le deuxième cas, le problème consiste surtout à définir un champ de vitesse géologique de tranche et une sommation temps permettant l'obtention d'une image en profondeur du sous-sol à explorer.

Pour résoudre ces problèmes de mesure de temps et de vitesse, plusieurs techniques d'acquisition peuvent être mises en oeuvre en sismique réflexion. La sismique réflexion est la méthode usuelle pour obtenir une image sismique du sous-sol. Dans cette méthode, à partir de sources d'énergie appropriées, appelées émetteurs, on émet des ondes acoustiques qui se propagent dans le sous-sol à explorer et se réfléchissent sur les différents réflecteurs qu'il renferme. Les ondes réfléchies sont enregistrées en fonction du temps sur des récepteurs adaptés disposés à la surface du sol ou dans l'eau. Chaque enregistrement ou trace fourni par un récepteur est ensuite affecté à la position du point ou d'une zone (bin) qui est situé au milieu du segment reliant l'émetteur au récepteur considérés. Cette opération constitue le tri en point milieu commun (PMC).

Une technique de prospection sismique devenue incontournable est la couverture multiple. Dans une telle technique, les émetteurs et les récepteurs sont disposés à la surface du milieu de telle sorte qu'un même point milieu regroupe plusieurs enregistrements. La série d'enregistrements associés au même point milieu forme ce qu'il est convenu d'appeler une collection d'enregistrements ou de traces en point milieu commun. L'ensemble des collections d'enregistrements est associé à une suite de points milieux différents situés de préférence, le long d'une même ligne de traitement. Pour l'obtention de telles collections, il convient de répartir à la surface du milieu les émetteurs et les récepteurs suivant une organisation prédéterminée.

Actuellement deux types de répartition prédominent. Dans le premier type dit "acquisition 2D", les émetteurs et récepteurs sont alignés sur une seule et même ligne. Ainsi les enregistrements sont tous associés à des trajectoires d'onde situées dans un même plan, au moins dans le cas théorique d'un sous-sol structuré en couches planes et parallèles. Ce type d'acquisition est utilisé couramment, en particulier, pour les acquisitions à grande échelle et pour étudier des sous-sols présentant une tectonique calme. Dans le second type dit "acquisition 3D", les émetteurs et récepteurs sont répartis plus ou moins régulièrement sur une surface de sorte que les enregistrements associés à un même PMC, en l'occurrence appelé "bin" car on attribue en fait un même PMC à des positions milieux appartenant à des surfaces élémentaires ou bin, correspondent à des trajectoires n'étant pas toutes situées dans le même plan vertical. Ce dernier type d'acquisition est plus particulièrement utilisé à ce jour dans le cas où l'on recherche une grande résolution (étude réservoir par exemple) ou dans le cas de tectonique complexe.

Ces deux types d'acquisition et les traitements sismiques classiques associés permettent à partir des collections en PMC d'obtenir une image sismique profondeur dans le plan vertical passant par l'ensemble de ces points milieux

- si l'on fait l'hypothèse classique d'un sous-sol homogène et isotrope, en couches planes et parallèles, pentées ou non, les réflexions associées à chacun des réflecteurs du sous-sol s'alignent le long d'indicatrices qui sont théoriquement des hyperboles centrées à la verticale du point-milieu, lesdites indicatrices étant définies généralement par deux paramètres : la vitesse de sommation $V_s$ et le temps $t_o$ de propagation du rayon à déport nul ; dans le cas de couches planes parallèles pentées, une correction d'obliquité est applicable sur la mesure de la vitesse de sommation, soit après sommation par une migration et une mesure du pendage, soit avant sommation par D.M. O. rendant la formule de DIX applicable ;
- si les enregistrements sont parallèles aux directions des génératrices d'une série cylindrique monoaxiale.

On rappelle que la formule de DIX, qui s'applique dans le cas de réflexions dans un sous-sol formé de couches planes et parallèles horizontales et pour de faibles déports entre émetteurs et récepteurs associés, exprime la vitesse de tranche $V_n$ dans une couche n du sous-sol limitée par des réflecteurs n et n-1, par la relation :

$$V_n = \left[ \frac{V^2_{RMS(n)} \times t_n - V^2_{RMS(n-1)} \times t_{n-1}}{t_n - t_{n-1}} \right]^{\frac{1}{2}}$$

dans laquelle $V_{RMS(n)}$ et $V_{RMS(n-1)}$ sont les vitesses moyennes quadratiques pour les trajets à déport nul depuis la surface respectivement aux réflecteurs n et n-1, $t_n$ et $t_{n-1}$ étant les temps desdits trajets. Les vitesses VRMS sont proches des vitesses $V_s$ mesurées sur les indicatrices.

Dès que l'on s'éloigne trop de ces cas, les traitements classiques, tous basés sur l'hypothèse de couches planes et parallèles (conditions d'application de la formule de DIX), ne permettent plus l'obtention d'une image correcte du sous-sol. Quand la formule de DIX n'est pas applicable le passage de l'information temps à l'information profondeur par les traitements classiques conduit à autant d'images profondeur que de traitements appliqués. De plus, les images obtenues contiennent des défauts irréversibles tels que superpositions locales ou absences locales d'images. La présence de trous ou d'informations redondantes ne peut être traitée par aucune des techniques de traitement conventionnel permettant de prendre en compte les effets de pendage ou de passer des temps aux profondeurs, par exemple, inversion, migration, tomographie...

FR-A-2 296 857 tente de rendre applicable la formule de DIX lorsque le sous-sol est composé de couches planes, parallèles et pentées. A cet effet, la formule de LEVIN est utilisée et la méthode préconisée ne concerne que les couches planes pentées et n'est plus applicable lorsque le sous-sol est composé de couches dioptriques courbées.

FR-A-2 648 562 préconise l'utilisation d'une grande quantité de traces de même déport et d'azimuts variables, de manière à tracer une sinusoïde de variation du temps et d'amplitude en fonction de l'azimut afin d'extraire les directions principales de l'anisotropie azimutale du sous-sol. Une telle méthode n'est pas du tout adaptée à une tectonique complexe car elle concerne une tectonique calme ou très calme.

FR-A-2 703 469 concerne également une méthode d'analyse de l'anisotropie azimutale, applicable uniquement en tectonique calme ou très calme mais non pas en tectonique complexe. De plus, la méthode ne s'intéresse qu'à un emplacement unique de terrain, comme s'il s'agissait d'un puits fictif.

En tout état de cause, aucune des méthodes décrites dans les brevets ci-dessus ne permet de retrouver les vrais champs de vitesses de tranches dans le cas des tectoniques complexes.

La présente invention a pour but une méthode d'acquisition et de traitement de données sismiques particulièrement adaptée à l'étude de tectoniques complexes permettant de remédier aux inconvénients précités, quand on n'est plus dans le champ d'application de la formule de DIX et que les effets de pendage ne peuvent plus être compensés par des traitements correctifs tels que DMO.

A titre d'exemple, des déformations du sous-sol se décrivant soit par une structure continue dont les axes tournent le long de son contour, soit par un empilement de structures continues dont les axes sont tournés les uns par rapport aux autres ou encore des déformations se décrivant par des structures discontinues du fait de la présence de failles perpendiculaires à l'axe de la ligne de traitement ou parallèles à lui, seront à cataloguer en tant que tectoniques complexes. De même, toute tectonique contenant des coins de vitesse devra être considérée comme une tectonique complexe, les indicatrices présentant dans ce cas des variations de courbures (effet de coin). De même, une zone calme située sous une zone de tectonique complexe sera à considérer comme complexe.

Un autre but de la présente invention est de permettre l'obtention des paramètres caractérisant au moins le champ de vitesse de sommation associé à des éléments réflecteurs correspondant à un point donné de la surface dudit milieu.

La présente invention a pour objet une méthode dans laquelle on enregistre quatre sismiques 2D en particulier du type sérié, (style 3D), ces quatre sismiques 2D étant orientées dans quatre directions tournées les unes par rapport aux autres d'un angle qui est de préférence égal à 45°.

Plus précisément, la méthode consiste à réaliser une collection de traces sismiques en point milieu commun dont le point milieu commun est ledit point donné, à soumettre les traces de cette collection à un traitement de corrections dynamiques et/ou statiques, et elle se caractérise par le fait qu'on constitue ladite collection de traces en point milieu commun associées audit point donné en enregistrant quatre sous-collections de traces en point milieu commun associées audit point donné suivant quatre directions angulaires passant par ledit point donné et qu'on applique à chacune des quatre sous-collections de traces en point milieu commun des corrections dynamiques et/ou statiques de façon à déterminer pour chaque sous-collection de traces une valeur de la courbure et/ou de la vitesse optimisant l'énergie de la somme des traces de la sous-collection corrigée considérée, les quatre valeurs ainsi obtenues représentant les composantes du champ de vitesse recherché pour chacun des éléments réflecteurs correspondant au point donné, chaque élément réflecteur étant caractérisé par un temps vertical $t_o$ de propagation avec réflexion pour un déport nul, le temps $t_o$ étant commun aux quatre sous-collections.

Un avantage de la présente invention réside dans le fait qu'on peut réaliser une sismique tridimensionnelle avec de la sismique 2D pour des milieux qui ne peuvent être explorés qu'en trois dimensions.

Un autre avantage réside dans le fait qu'on peut obtenir des informations relatives à des zones ou trous situées entre des zones pour lesquelles on avait des informations ; il en résulte qu'on a en tectonique complexe la même continuité d'informations qu'on obtenait par la méthode 3D classique en tectonique calme ou non complexe.

Selon une autre caractéristique de l'invention, les directions angulaires passant par le point donné, sont telles que deux directions consécutives forment un angle aigu compris entre 40° et 50° et de préférence d'environ 45°.

La méthode peut être appliquée en une pluralité de points donnés constituant des points milieux communs, situés aux noeuds d'une grille à mailles régulières, de préférence en forme de parallélogramme.

L'acquisition des sous-collections de traces est réalisée avantageusement selon des lignes coïncidant avec les côtés ou les diagonales des mailles en forme de parallélogramme formant la grille.

Pour la constitution d'un bloc 3D de traces sommes, en chaque point milieu formant un noeud de la grille on constitue une trace somme en juxtaposant des portions de traces centrées sur les valeurs des $t_0$ associées aux réflecteurs à la verticale dudit point milieu, chaque portion de trace centrée sur une valeur $t_0$ associée à un réflecteur étant obtenue en sommant séparément chacune des quatre sous-collections de traces 2D associées au point milieu et en sélectionnant la portion centrée sur $t_0$ de celle des traces sommes correspondant au maximum d'énergie.

D'autres avantages et caractéristiques ressortiront mieux à la lecture de la description d'une méthode selon la présente invention, ainsi que des dessins annexés sur lesquels :

- la figure 1 est une représentation schématique d'un plan de position des lignes d'acquisition des données sismiques selon l'invention, le cercle représentant les déports maximum du dispositif en point milieu commun qui est constitué par le centre de l'étoile.
- la figure 2 est une représentation schématique de trois types de collections de traces en point milieu commun,
- la figure 3 est une représentation synoptique d'un milieu à tectonique complexe,

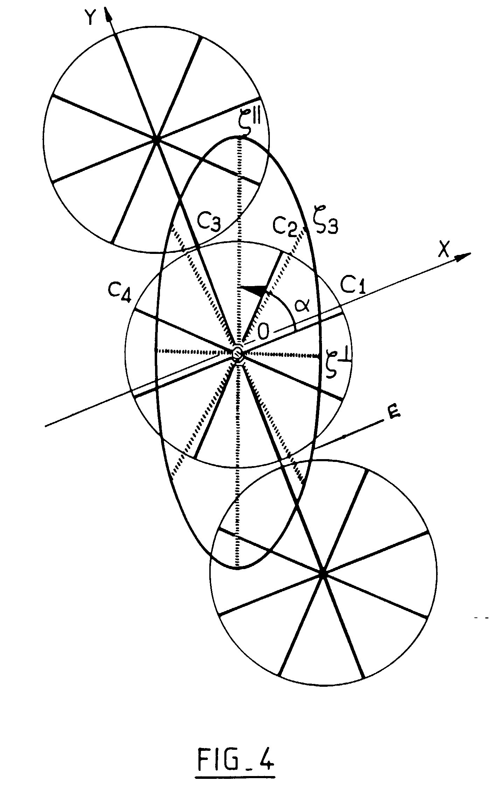

- la figure 4 est une représentation en vue de dessus des lignes sur lesquelles sont définies les composantes du champ de vitesses et les paramètres définissant la forme d'onde en surface,
- la figure 5 est une représentation schématique d'une quadri-BAP représentative de trois événements synthétiques,
- la figure 6 est une représentation schématique d'une quadri-BAP où les événements de la quadri-BAP de la figure 5 sont pointés,
- la figure 7 est une représentation de la trace somme des maxima d'énergie des événements pointés de la figure 6,
- la figure 8 est une représentation schématique d'un milieu à tectonique complexe monoaxial.

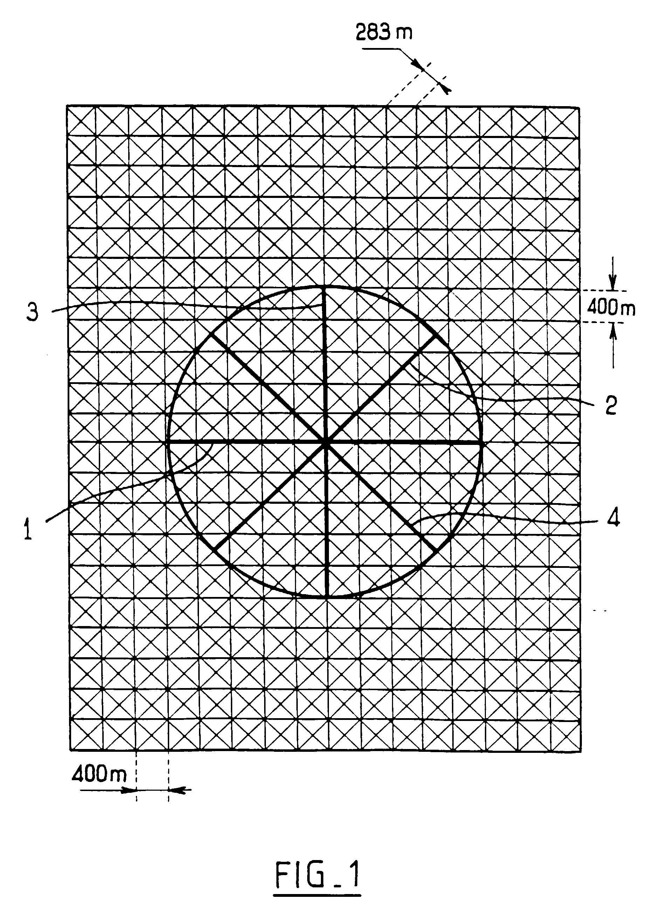

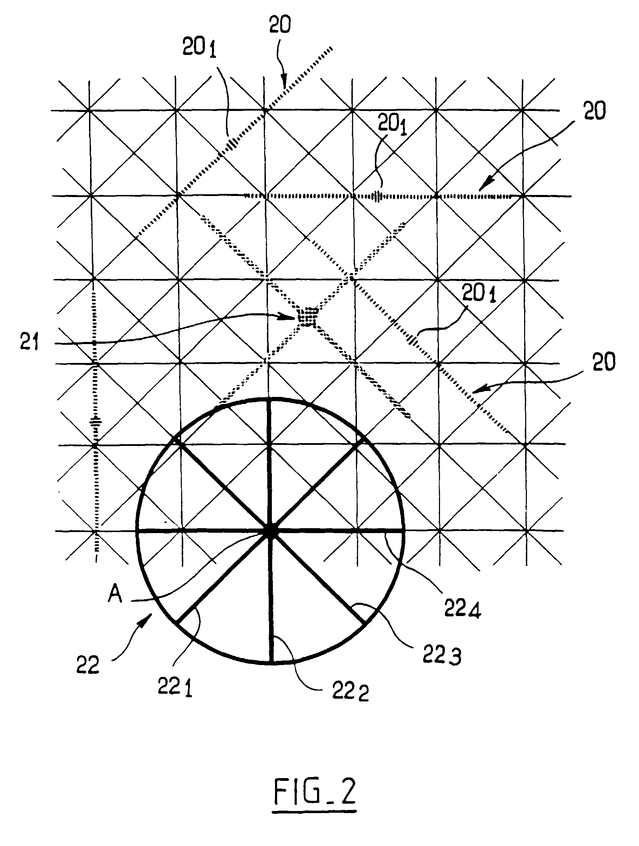

Sur la surface d'un milieu à explorer, on dispose un dispositif d'émission, de réception et d'enregistrement de données sismiques issues du sous-sol du milieu, ledit dispositif étant du type utilisé en sismique réflexion. Les lignes d'acquisition (enregistrement) c'est-à-dire les lignes de séries d'émetteurs et de récepteurs-enregistreurs, sont représentées sur la figure 1 et elles sont dirigées dans au moins quatre directions 1 à 4 qui sont telles que l'angle entre deux directions consécutives (1,2 ; 2,3 ; 3,4) est de préférence égal à 45°. Avec la disposition de la figure 1, on réalise des enregistrements quatre fois 2D et en particulier des enregistrements 4 x 2D sérié, c'est-à-dire un ensemble de lignes d'acquisition parallèles, chaque série de traits parallèles représentant des enregistrements en 2D de type marine ou de type linéaire avec tir au centre, mais avec un pas spatial qui est, par exemple, de 400 m pour les lignes dirigées suivant les directions 1 et 3 et d'environ 283 m pour les deux autres séries de lignes à 45° et dirigées suivant les directions 2 et 4. Bien évidemment, ont peut diminuer le pas spatial jusqu'à l'inter-trace qui est généralement de 25 m. Chaque ligne est enregistrée avec des paramètres classiques de 2D, par exemple 96 traces espacées de 25 m et une distance inter-tir de 12,5 m (stack array). Les enregistrements des quatre séries de lignes sont groupés en point milieu commun (PMC), les groupements en PMC pouvant être classés en trois catégories (figure 2). La première catégorie classique, représentée par une ligne unique 20, correspond aux déports entre émetteur-récepteur, le point central $20_1$ représentant le point milieu commun. On utilisera ce type de PMC pour l'imagerie en 4 X 2D.

La deuxième catégorie est représentée par une croix 21.

La troisième catégorie est représentée par une étoile 22 regroupant quatre lignes $22_1$ à $22_4$ à 45° les unes des autres. Le point milieu commun est centré sur un point donné A de la surface. Cette troisième catégorie permet de réaliser quatre sous-collections de traces PMC centrées sur le point donné A. Chaque sous-collection de traces PMC est corrigée dynamiquement et/ou statiquement de manière connue en soi. Sur les PMC de catégorie trois, on effectue une analyse de courbure par BAP comme indiqué pour la méthode POLYSTACK de E. de BAZELAIRE (GEOPHYSICS, vol. 53, n° 2, Fev. 88, p. 143-157), les analyses de courbure ou BAP des quatre lignes d'un même PMC sont rassemblées en un seul tableau à quatre plans ou quadri-BAP, une BAP étant une collection de traces dont chacune est issue d'une même collection en point milieu commun après application d'une correction hyperbolique de type statique et une sommation, les n traces d'une BAP correspondant alors à une investigation selon n courbures différentes. Après quoi, on détecte les maxima d'énergie comme pour le POLYSTACK en considérant le tableau dans son ensemble. Une fois les $t_0$ pointés, c'est-à-dire une fois que les temps de trajet $t_0$ pour un déport nul, correspondant à une distance nulle entre émetteur et récepteur, ont été déterminés, on pointe les maxima dans chaque tableau individuel pour les quatre valeurs $t_p^1(to)$, $t_p^2(to)$, $t_p^3(to)$ et $t_p^4(to)$ et ceci pour chaque to déterminé. Ces divers $t_p$ correspondent à la somme optimale de chacune des quatre sous-collections de traces au voisinage de la valeur $t_0$ considérée dans une fenêtre élémentaire de largeur égale à 1/B, B étant la bande passante des signaux enregistrés.

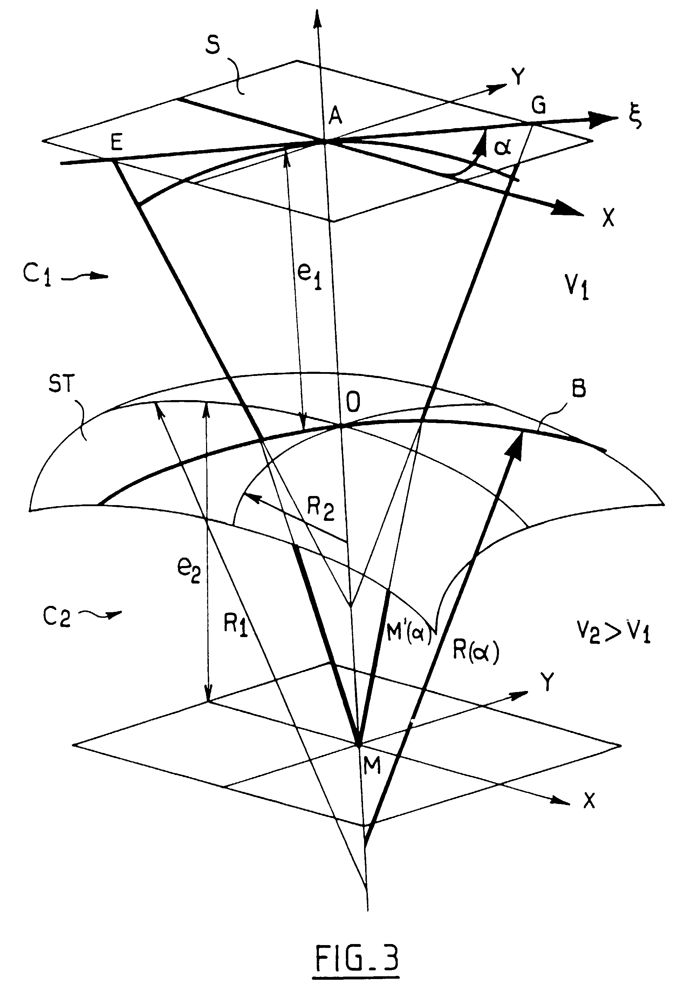

La figure 3 représente schématiquement un sous-sol d'un milieu sans pendage dont la surface est matérialisée par le plan S et qui comprend deux couches $C_1$ et $C_2$, de vitesses différentes $V_1$ et $V_2$ et séparées par un réflecteur présentant la forme d'une surface torique ST, les épaisseurs à l'apex des couches $C_1$ et $C_2$ étant respectivement égales à $e_1$ et $e_2$.

Sur la surface S, on a représenté le point donné A, point milieu commun de chaque sous-collection de traces, une direction de référence X dans le plan de symétrie et une direction $\zeta$ d'enregistrement orientée d'un angle $\alpha$ par rapport à l'axe X de référence.

La surface torique ST a pour rayons principaux orthogonaux $R_1$ et $R_2$, $R_1$ étant mesuré dans le plan de symétrie.

L'équation du rayon de courbure $R(\alpha)$ de la surface torique ST autour du point O est donnée par la formule

$$\frac{1}{R(\alpha)} = \frac{\cos^2\alpha}{R_1} + \frac{\sin^2\alpha}{R_2}$$

Dans le cas de l'approximation paraxiale, c'est-à-dire le cas pour lequel tous les rayons utilisés forment avec l'axe de symétrie de la famille de rayons des angles petits pour lesquels l'angle en radians est égal à son sinus ou à sa tangente (angles inférieurs à environ 15°), on peut admettre que tous les rayons appartenant au point milieu commun (PMC) sont contenus dans un même plan, celui défini par la ligne d'enregistrement $\zeta$ et la droite AOM où A est le point donné ou PMC, O l'apex de l'interface ou surface torique ST et M le centre de courbure du front d'onde incident.

Le centre de courbure $M'(\alpha)$ du front d'onde de sortie dans la première couche $C_1$ est l'image optique du point source M à travers l'interface ST d'apex O. Le point M' se déduit donc de la position du point M et des paramètres du sous-sol par la formule de conjugaison optique (SHAH et LEVIN, 1973 et E. de BAZELAIRE). Cette formule, donnée ci-après sous une forme simplifiée, exprime la stationnarité au deuxième ordre des temps de trajet entre deux points quelconques de l'espace situés de part et d'autre de l'interface et elle est conforme au principe de Fermat.

$$\frac{1}{V_2} \times \left( \frac{1}{OM(\alpha)} - \frac{1}{R(\alpha)} \right) = \frac{1}{V_1} \times \left( \frac{1}{OM'(\alpha)} - \frac{1}{R(\alpha)} \right) \qquad (1)$$

Le temps $t_o$ pour un déport nul, c'est-à-dire pour un couple émetteur-récepteur confondu au point donné A, est donné par la formule :

$$t_o = \frac{2e_1}{V_1} + \frac{2e_2}{V_2} \qquad\qquad (2)$$

Dans ce cas, on peut utiliser l'approximation plane pour les nappes de rayons tournées de $\alpha$.

La théorie PSCAN, développée par E. de BAZELAIRE, définit la profondeur de mise au point $P(\alpha)$ telle que : $2P(\alpha)=V_1 t_p(\alpha)$ où $t_p$ est le temps de profondeur de mise au point. Dans le cas de la figure 3, $P(\alpha)$ représente la distance $AM'(\alpha)$.

Le calcul de $t_p(\alpha)$ donne :

$$t_p(\alpha) = 2e_1/V_1 + \frac{2e_2 V_2}{V_1 V_1} \frac{1}{1 + (V_2 - V_1)e_2\left[\sin^2\alpha/R_2 + \cos^2\alpha/R_1\right]}$$

$$(3)$$

Si on considère les définitions suivantes :

$$t_0^1 = 2e_1/V_1 \qquad \zeta_m = \frac{1}{t_p(0) - t_0^1}$$

$$\zeta_M \frac{1}{t_p(\pi/2) - t_0^1} \qquad \zeta(\alpha) = \frac{1}{t_p(\alpha) - t_0^1} \qquad (4)$$

et si on reporte ces termes dans l'équation (3) donnant $t_p(\alpha)$, on obtient :

$$\zeta(\alpha) = \zeta_m \cos^2\alpha + \zeta_M \sin^2\alpha \qquad (5)$$

L'équation (5) est celle d'un tenseur elliptique qui est exprimé en courbures translatées.

La nouvelle équation de $t_p$ est alors donnée par la formule :

$$t_p(\alpha) = \frac{t_p(0) \cdot t_p(\pi/2) - t_0^1 \, (t_p(0) \cos^2\alpha + t_p(\pi/2) \sin^2\alpha)}{t_p(0) \sin^2\alpha + t_p(\pi/2) \cos^2\alpha - t_0^1} \qquad (6)$$

Cette équation a une forme intrinsèque : elle ne dépend plus du modèle utilisé. Elle est représentative de l'ensemble des fronts d'onde que l'on peut rencontrer en sismique 3D quand les interfaces entre les milieux traversés sont des surfaces continues et à dérivées continues.

On voit sur la formule (6) que, pour chaque valeur de temps pointée, il y a quatre paramètres indépendants à rechercher qui sont $t_p(O)$, $t_p(\pi/2)$, $t^1_o$ et l'angle $\alpha$ ou azimut. Pour les retrouver, on doit faire alors obligatoirement au moins quatre mesures indépendantes $t^1_p$, $t^2_p$, $t^3_p$, $t^4_p$ pour une même position temps to.

Les axes de référence étant définis par le dispositif de mesure, l'axe de référence angulaire est donc OX. Par rapport à cet axe, on définit l'angle $\alpha$ avec l'axe du "Parapluie" de sommation de plus grand $t_p$, c'est-à-dire de plus faible courbure de la représentation temps du front d'onde 3D. Un "Parapluie" de sommation est la représentation temps en fonction des déports et des azimuts, du front d'onde tridimensionnel reçu en surface par les récepteurs. Il s'agit d'une extension à trois dimensions de l'indicatrice hyperbolique représentative en temps d'un front d'onde circulaire qu'on recevrait dans un espace à deux dimensions. La représentation temps ci-dessus est constituée en projection sur le plan de la surface par une ellipse E.

On appelle :

$$t_p^{\parallel} = 1/\zeta^{\parallel} \qquad (7)$$

cette valeur de référence. L'axe perpendiculaire à cette grandeur est celui sur lequel la valeur du $t_p$ est minimale, c'est-à-dire de courbure la plus forte. On appelle cette valeur :

$$t_p^{\perp} = 1/\zeta^{\perp} \qquad (8)$$

La valeur $\zeta_3$ de l'axe à 45 degrés se déduit des deux valeurs précédentes et du temps de transit $\tau$. Les paramètres qui définissent le front d'onde sont donc :

$$\begin{pmatrix} t_p^{\parallel} \\ t_p^{\perp} \\ \tau \\ \alpha \end{pmatrix} \quad correspondant \ aux \quad \begin{pmatrix} t_p(0) \\ t_p(\pi/2) \\ t_0^1 \\ \alpha \end{pmatrix} \qquad (9)$$

Les paramètres de droite ont été définis lors de l'analyse de l'équation donnant $t_p(\alpha)$.

Les paramètres de gauche sont liés aux mesures faites par le système d'équations suivant :

$$\begin{cases} t_p^1 = \dfrac{2t_p^{\backslash\backslash} \cdot t_p^{\perp} - \tau(t_p^{\backslash\backslash} + t_p^{\perp}) + \tau(t_p^{\perp} - t_p^{\backslash\backslash})\cos 2\alpha}{t_p^{\backslash\backslash} + t_p^{\perp} - 2\tau + (t_p^{\perp} - t_p^{\backslash\backslash})\cos 2\alpha} \\[4mm] t_p^2 = \dfrac{2t_p^{\backslash\backslash} \cdot t_p^{\perp} - \tau(t_p^{\backslash\backslash} + t_p^{\perp}) - \tau(t_p^{\perp} - t_p^{\backslash\backslash})\sin 2\alpha}{t_p^{\backslash\backslash} + t_p^{\perp} - 2\tau - (t_p^{\perp} - t_p^{\backslash\backslash})\sin 2\alpha} \\[4mm] t_p^3 = \dfrac{2t_p^{\backslash\backslash} \cdot t_p^{\perp} - \tau(t_p^{\backslash\backslash} + t_p^{\perp}) - \tau(t_p^{\perp} - t_p^{\backslash\backslash})\cos 2\alpha}{t_p^{\backslash\backslash} + t_p^{\perp} - 2\tau - (t_p^{\perp} - t_p^{\backslash\backslash})\cos 2\alpha} \\[4mm] t_p^4 = \dfrac{2t_p^{\backslash\backslash} \cdot t_p^{\perp} - \tau(t_p^{\backslash\backslash} + t_p^{\perp}) + \tau(t_p^{\perp} - t_p^{\backslash\backslash})\sin 2\alpha}{t_p^{\backslash\backslash} + t_p^{\perp} - 2\tau + (t_p^{\perp} - t_p^{\backslash\backslash})\sin 2\alpha} \end{cases}$$

$$(10)$$

Il faut inverser ce système pour trouver les paramètres :

$\alpha$ (azimut), $\tau$ (temps de transit), $t_p^{\backslash\backslash}$ (courbure d'indicatrice minimum), $t_p^{\perp}$ (courbure d'indicatrice maximum) en fonction des mesures.

$$t_p^1 \quad t_p^2 \quad t_p^3 \quad t_p^4 \qquad\qquad (11)$$

Ce calcul est tout-à-fait classique. On commence par rechercher la valeur de $\tau$ par une suite de combinaisons linéaires entre les quatre équations du système ci-dessus. On trouve une équation du second degré : il y a deux valeurs de $\tau$ qui sont solutions.

Cela veut dire qu'il existe deux fronts d'ondes seulement le long des prolongations des rayons dans le milieu de sortie pour lesquels le parapluie de sommation est représentable par un ellipsoïde de courbures. C'est sur ces deux parapluies de sommation et seulement sur eux que l'on a le droit de faire l'interpolation spatiale bidimensionnelle. Les deux valeurs de $\tau$ sont :

$$\begin{matrix} \tau_1 \\ \tau_2 \end{matrix} = \frac{t_p^1 t_p^4 - t_p^2 t_p^3 \pm \sqrt{(t_p^1 t_p^4 - t_p^2 t_p^3)^2 + (t_p^2 + t_p^4 - t_p^1 - t_p^3)\,[\,t_p^1 t_p^3 (t_p^2 + t_p^4) - t_p^2 t_p^4 (t_p^1 + t_p^3)\,]}}{t_p^2 + t_p^4 - t_p^1 - t_p^3}$$

$$(12)$$

Pour les deux valeurs de $\tau$ la valeur de l'angle $\alpha$ est formellement la même, ce qui signifie que les rayons calculés sont restés coplanaires. On obtient les deux valeurs de $\alpha$ modulo $\pi$ par la formule suivante :

$$\tan 2\alpha = \frac{(t_p^2 - t_p^4)\,(t_p^1 - \tau)\,(t_p^3 - \tau)}{(t_p^3 - t_p^1)\,(t_p^4 - \tau)\,(t_p^2 - \tau)} \qquad\qquad (13)$$

Les valeurs de $t_p$(parallèle) et $t_p$(perpendiculaire) se déduisent des relations suivantes :

$$t_p^{\backslash\backslash} = \tau + \frac{1}{\varsigma_{\backslash\backslash}} \quad t_p^{\perp} = \tau + \frac{1}{\varsigma_{\perp}} \tag{14}$$

avec :

$$\varsigma_{\backslash\backslash} = \frac{1}{2}\left(\frac{1}{t_p^1 - \tau} + \frac{1}{t_p^2 - \tau} + \frac{1}{t_p^3 - \tau} + \frac{1}{t_p^4 - \tau}\right) + \sqrt{\left(\frac{1}{t_p^4 - \tau} - \frac{1}{t_p^2 - \tau}\right)^2 + \left(\frac{1}{t_p^1 - \tau} - \frac{1}{t_p^3 - \tau}\right)^2}$$

$$\varsigma_{\perp} = \frac{1}{2}\left(\frac{1}{t_p^1 - \tau} + \frac{1}{t_p^2 - \tau} + \frac{1}{t_p^3 - \tau} + \frac{1}{t_p^4 - \tau}\right) - \sqrt{\left(\frac{1}{t_p^4 - \tau} - \frac{1}{t_p^2 - \tau}\right)^2 + \left(\frac{1}{t_p^1 - \tau} - \frac{1}{t_p^3 - \tau}\right)^2}$$

$$\tag{15}$$

Muni de ces quatre valeurs, il est alors possible de reconstituer l'ensemble de toutes les intersections du parapluie de sommation (stack) par un plan vertical quelconque passant par son axe central.

Dans ce qui précède et notamment en se référant à la figure 1, on voit que l'invention permet de déterminer les quatre valeurs nécessaires pour la reconstitution de l'ensemble de toutes les intersections du parapluie de sommation par un plan vertical quelconque passant par son axe central. De plus et selon l'invention, il est préférable de sommer les quatre lignes séparément et choisir après la meilleure sommation parmi ces quatre sommes. En conséquence, l'imagerie doit donc être dissociée entièrement de l'estimation du champ de vitesse, lesdites vitesses étant obtenues uniquement en les points de croisement du système d'enregistrement (4 x 2D) pour lesquels il existe les quatre lignes en même temps. On peut ainsi estimer de façon complète les quatre valeurs nécessaires et en déduire les directions et les valeurs des courbures principales en fonction de $t_o$. On pourra par la suite, en déduire les vitesses de tranche du sous-sol par des méthodes classiques à deux dimensions qui ne sont valables que le long des plans de rayon des directions principales, en utilisant les $t_o$ et les $t_p$ principaux séparément dans chaque plan.

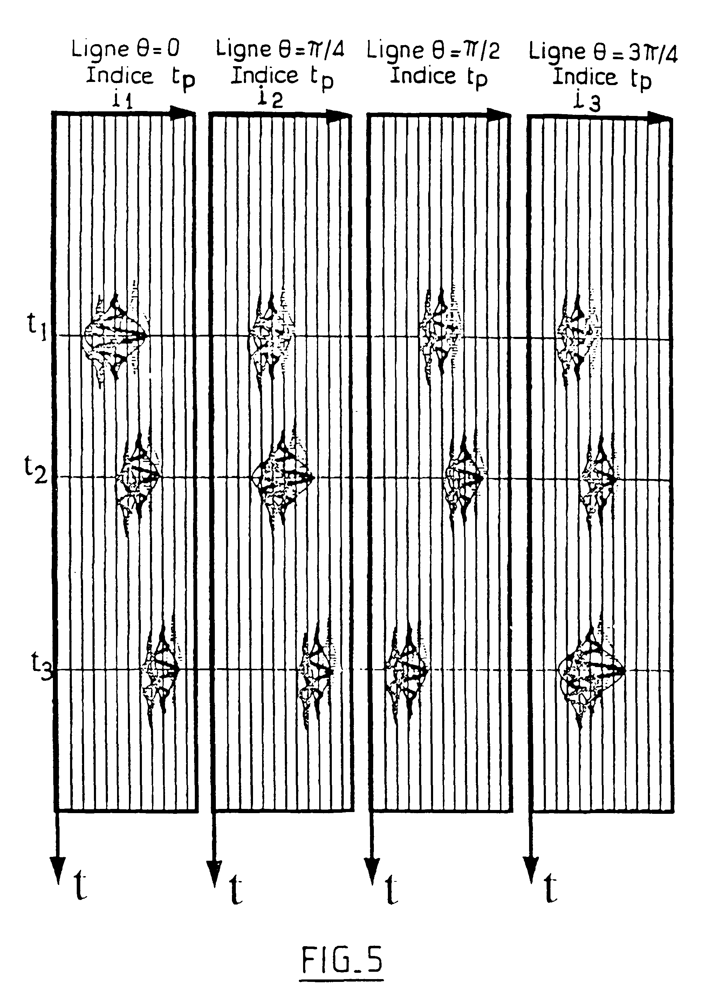

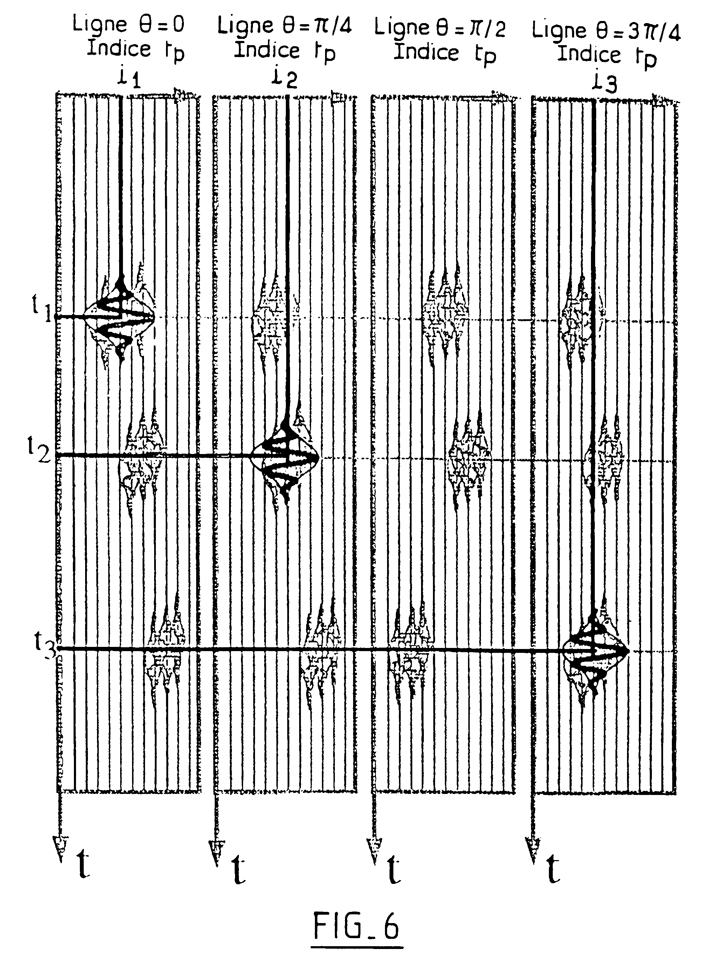

Sur la figure 5, on a représenté une quadri-BAP relative à un exemple synthétisé de trois événements complets déterminés suivant les quatre lignes à 45° les unes des autres. Chaque BAP est relative à une sous-collection de traces suivant l'une des directions d'acquisition $\theta=0$, $\theta=\pi/4$, $\theta=\pi/2$, et $\theta=3\pi/4$ ; cette BAP optimise l'énergie de la somme des traces et elle est représentative des événements apparaissant aux temps $t_1$ à $t_3$ en fonction de l'indice $t_p$ (profondeur de mise au point). Au temps $t_1$, c'est l'événement de la ligne $\theta=0$ et d'indice $i_1$ des $t_p$ qui présente le maximum d'énergie. Au temps $t_2$, c'est l'événement de la ligne $\theta=\pi/4$ et d'indice $i_2$ qui présente le maximum d'énergie, alors qu'au temps $t_3$, c'est l'événement de la ligne située à $3\pi/4$ et d'indice $i_3$ qui présente le maximum d'énergie. C'est ce qui est représenté sur la figure 6 qui est un exemple de pointé des trois événements.

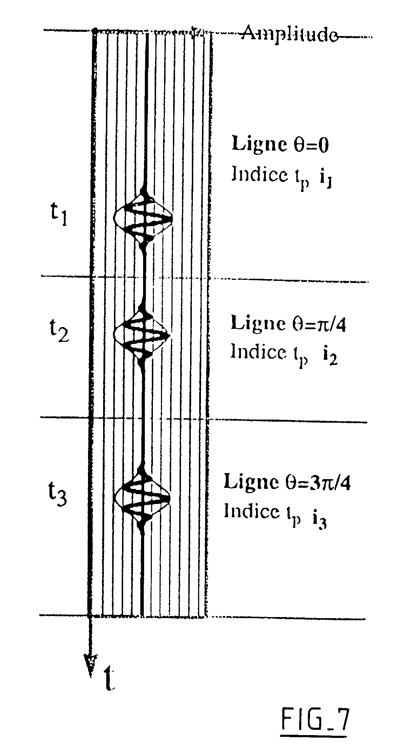

La figure 7 est un exemple de construction de la trace somme des maxima d'énergie où on retrouve les trois événements aux divers temps $t_1$, $t_2$, $t_3$. Pour chaque temps pointé $t_1$, $t_2$, $t_3$, on relève les maxima d'amplitude dans chaque BAP de la figure 5, ce qui permet de déterminer les $t_p$ correspondant à ces maxima, à savoir $t^1_p$, $t^2_p$, $t^3_p$, $t^4_p$ et ce pour chacun des temps pointés. Ces valeurs de $t_p$ sont utilisées pour le calcul des paramètres que $\alpha$, $\tau$, $t_p^{\backslash\backslash}$ et $t_p^{\perp}$ comme indiqué précédemment.

Dans le cas où la structure complexe est composée d'une série cylindrique (plis uni-axiaux) c'est-à-dire que tous les cylindres ont des génératrices parallèles entre elles et ne tournent pas les uns par rapport aux autres et lorsqu'on connaît la direction des axes, on peut s'affranchir des enregistrements suivant les axes à 45° pour se limiter aux directions DIP et STRIKE c'est-à-dire respectivement de plus fort et de plus faible pendage. Dans ces conditions, on combine les informations DIP et les informations STRIKE alors que jusqu'à maintenant on utilisait les informations DIP ou les informations STRIKE.

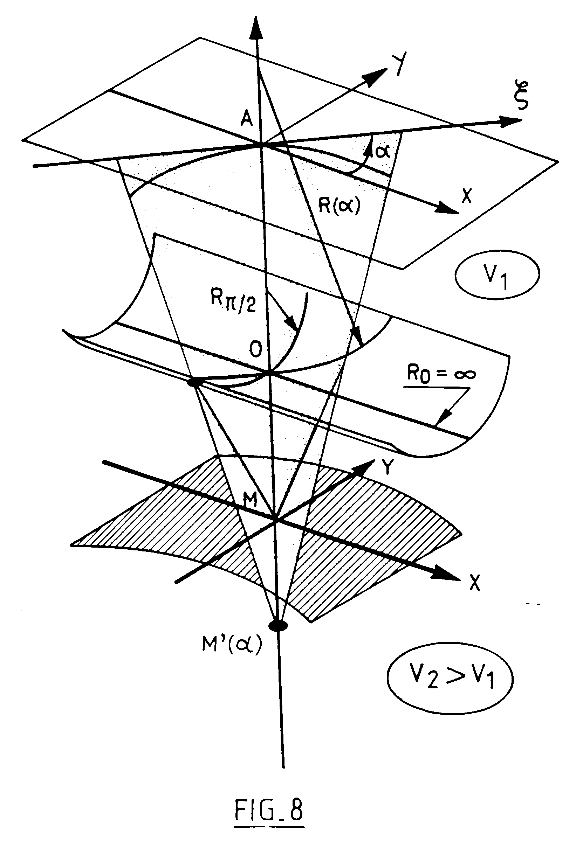

En se reportant à la figure 8, on voit que nous sommes en présence d'un sous-sol de structure cylindrique mono-axiale c'est-à-dire que le sous-sol est assimilé à un cylindre d'axe AX dont tous les rayons de courbure parallèles à l'axe AX sont infinis. Lorsqu'on connaît ladite direction AX, l'équation (5) du tenseur elliptique dégénère et il suffit de mesurer les $t_p$ parallèles et perpendiculaires à l'axe AX pour connaître la totalité du tenseur qui devient symétrique. En fait, tous les termes en $\alpha$ disparaissent et on est ramené à une acquisition de données sismiques de type 2 x 2D sérié dans les directions AX (STRIKE) et AY (DIP).

Il est évident qu'on peut choisir d'autres valeurs d'angle entre les lignes d'acquisition pour autant qu'on puisse se ramener à une base orthogonale dans un espace vectoriel à quatre dimensions.

Une base est orthogonale si lorsqu'on fait varier un seul des quatre paramètres à mesurer, les trois autres ne varient pas. Lorsque la base n'est pas orthogonale c'est-à-dire lorsque les directions des lignes d'acquisition ne sont pas exactement à 45° les unes des autres, on définit une autre grille ou étoile dont les axes sont à 45° et on effectue une projection des mesures des paramètres sur ces directions de manière à se ramener à une base orthogonale. Une telle projection n'est possible que si les directions des lignes d'acquisition de données sismiques sont suffisamment éloignées les unes des autres.

Dans certains cas, en sismique marine par exemple, il peut être difficile de faire passer exactement les quatre lignes d'acquisition par un même point. On peut utiliser alors le centre de gravité de la zone formée par les intersections desdites quatre lignes d'acquisition comme centre de l'étoile et on projette les mesures des paramètres acquises avec lesdites lignes d'acquisition sur la base orthogonale correspondant à ce centre de gravité pour déterminer ensuite les paramètres du front d'onde.

Les étoiles 22 de la figure 2 sont utilisées dans l'imagerie 4 x 3D pour obtenir un bloc 3D unique à partir de quatre blocs élémentaires 3D, ainsi que pour la détermination des courbures en 4 X 2D et 4 X 3D.

**Revendications**

1. Méthode d'exploration d'un milieu en sismique réflexion, particulièrement adaptée à un milieu à tectonique complexe, pour l'obtention des paramètres caractérisant au moins le champ de vitesse de sommation associé à des éléments réflecteurs situés à la verticale d'un point donné (A) de la surface du milieu (S), ladite méthode consistant à réaliser une collection de traces sismiques en point milieu commun dont le point milieu commun est ledit point donné, à soumettre les traces de cette collection à un traitement de corrections dynamiques et/ou statiques, et se caractérisant en ce que l'on constitue la collection de traces associée au point donné (A) en enregistrant quatre sous-collections de traces en point milieu commun associées audit point donné suivant quatre directions angulaires (1 à 4) passant par ledit point donné et l'on applique à chacune des quatre sous-collections de traces en point milieu commun des corrections dynamiques et/ou statiques de façon à déterminer pour chaque sous-collection une valeur de la courbure et/ou de la vitesse optimisant l'énergie de la somme des traces de la sous-collection corrigée considérée, les quatre valeurs ainsi obtenues représentant les composantes du champ de vitesse de sommation recherché pour chacun des éléments réflecteurs correspondant au point donné et caractérisé par un temps vertical $t_o$ de propagation avec réflexion pour un déport nul.

2. Méthode selon la revendication 1, caractérisée en ce qu'à partir des quatre composantes du champ de vitesse de sommation associé à un desdits éléments réflecteurs, on détermine des paramètres tels que $\alpha$, $\tau$, $t_p^{\backslash\backslash}$ et $t_p^{\perp}$ caractérisant le front d'onde associé audit élément réflecteur, $\alpha$ représentant l'azimut de la courbure la plus forte par rapport à une direction de référence prédéterminée, $t_p^{\backslash\backslash}$ et $t_p^{\perp}$ désignant respectivement l'inverse des courbures la plus faible et la plus forte de la représentation temps en fonction des déports et des azimuts et $\tau$ désignant le temps de transit.

3. Méthode selon la revendication 1 ou 2, caractérisée en ce que les directions angulaires passant par le point donné, sont telles que deux directions consécutives forment un angle aigu compris entre 40° et 50° et de préférence d'environ 45°.

4. Méthode selon l'une des revendications 1 à 3, caractérisée en ce qu'elle est appliquée en une pluralité de points donnés constituant des points milieux communs, situés aux noeuds d'une grille à mailles régulières, de préférence en forme de parallélogramme.

5. Méthode selon la revendication 4, caractérisée en ce que l'acquisition des sous-collections de traces est réalisée selon des lignes coïncidant avec les côtés ou les diagonales des mailles en forme de parallélogramme formant la grille.

6. Méthode selon la revendication 5, pour la constitution d'un bloc tridimensionnel de traces sommes, caractérisée en ce qu'en chaque point milieu formant un noeud de la grille on constitue une trace somme en juxtaposant des portions de traces centrées sur les valeurs des $t_o$ associées aux réflecteurs à la verticale dudit point milieu, chaque portion de trace centrée sur une valeur $t_o$ associée à un réflecteur étant obtenue en sommant séparément chacune des quatre sous-collections de traces bidimensionnelles associées au point milieu et en sélectionnant la portion

centrée sur $t_o$ de celle des traces sommes correspondant au maximum d'énergie.

7. Méthode selon la revendication 1, caractérisée en ce que lorsque la structure du sous-sol à explorer est une structure cylindrique mono-axiale dont la direction de l'axe longitudinal (AX) est déterminée, on réalise une acquisition de données sismiques du type deux fois bidimensionnel sérié uniquement dans les directions parallèles, dites STRIKE, et perpendiculaires, dites DIP, audit axe (AX).

**Patentansprüche**

1. Verfahren zur Exploration einer Umgebung durch seismische Reflexion, insbesondere für eine Umgebung mit komplexer Tektonik, um Parameter zu erhalten, die wenigstens das summierte Geschwindigkeitsprofil charakterisieren, welches den Reflexionselementen zugeordnet ist, die auf der Vertikalen eines gegebenen Punktes (A) der Oberfläche der Umgebung (S) liegen, wobei das Verfahren darin besteht, eine Sammlung von seismischen Linien eines gemeinsamen Umgebungspunktes herzustellen, deren gemeinsamer Umgebungspunkt der gegebene Punkt ist, die Linien dieser Sammlung einer dynamischen und/oder statischen Korrekturbearbeitung zu unterziehen und sich dadurch kennzeichnet, daß die Sammlung der dem gegebenen Punkt (A) zugeordneten Linien unter Aufzeichnung von vier Unter-Sammlungen von Linien des gemeinsamen Umgebungspunktes gebildet wird, welche dem gegebenen Punkt aus vier, durch den gegebenen Punkt hindurch gehende Winkelrichtungen (1 bis 4) zugeordnet sind, und auf jede der vier Untersammlungen von Linien des gemeinsamen Umgebungspunktes dynamische und/oder statisch Korrekturen angewendet werden, um so für jede Untersammlung einen Wert der Krümmung und/oder der Geschwindigkeit zu bestimmen, der die Energie der Summe der Linien der betreffenden, korrigierten Unter-Sammlung optimiert, wobei die so erhaltenen vier Werte die Komponenten des summierten Geschwindigkeitsprofils darstellen, welches für jedes dem gegebenen Punkt entsprechenden Reflexionselement gesucht wird und durch eine vertikale Laufzeit $t_o$ der Reflexionsausbreitung für einen seitlichen Null-Abstand gekennzeichnet ist.

2. Verfahren nach Anspruch 1, dadurch gekennzeichnet, daß auf Basis der vier Komponenten des einem der Reflexionselemente zugeordneten, summierten Geschwindigkeitsprofils Parameter bestimmt werden, wie $\alpha$, $\tau$, $t_p^{\backslash\backslash}$ und $t_p^{\perp}$, welche die dem Reflexionselement zugeordnete Wellenfront charakterisieren, wobei $\alpha$ den Azimut der stärksten Krümmung in Bezug zu einer vorbestimmten Bezugsrichtung darstellt, $t_p^{\backslash\backslash}$ und $t_p^{\perp}$ jeweils den Kehrwert der geringsten und der stärksten Krümmungen der Zeitdarstellung in Abhängigkeit von den seitlichen Abständen und den Azimuts bezeichnet und $\tau$ die Laufzeiten bezeichnet.

3. Verfahren nach Anspruch 1 oder 2, dadurch gekennzeichnet, daß die durch den gegebenen Punkt hindurch gehenden Winkelrichtungen derart gewählt sind, daß zwei aufeinander folgende Ausrichtungen einen spitzen Winkel zwischen 40 ° und 50° und vorzugsweise von ungefähr 45° einschließen.

4. Verfahren nach einem der Ansprüche 1 bis 3, dadurch gekennzeichnet, daß es auf eine Mehrzahl von die gemeinsamen Umgebungspunkte bildenden gegebene Punkte angewendet wird, die auf den Knoten eines gleichmäßigen Feldnetzes, vorzugsweise in Form eines Parallelogramms, liegen.

5. Verfahren nach Anspruch 4, dadurch gekennzeichnet, daß die Erfassung von Untersammlungen von Linien entlang der Linien ausgefüllt wird, die mit den Seiten oder den Diagonalen des das Netz bildenden, parallelogrammförmigen Feldes übereinstimmen.

6. Verfahren nach Anspruch 5 zur Bildung eines dreidimensionalen Blocks von Summenlinien, dadurch gekennzeichnet, daß an jedem Umgebungspunkt, der einen Knoten des Netzes bildet, eine Summenlinie gebildet wird, indem Linienabschnitte, die auf die $t_o$-Werte, die den Reflektoren in der Vertikalen des Umgebungspunktes zugeordnet sind, zentriert sind, nebeneinander gelegt werden, wobei jeder Linienabschnitt, der auf einen, einem Reflektor zugeordneten $t_o$-Wert zentriert ist, durch getrennte Summierung jeder der dem Umgebungspunkt zugeordneten vier Untersammlungen von zweidimensionalen Linien und unter Auswahl des auf $t_o$ dieser Summenlinien zentrierten Abschnitts, der der maximalen Energie entspricht, erhalten wird.

7. Verfahren nach Anspruch 1, dadurch gekennzeichnet, daß, wenn die Struktur des zu explorierenden Untergrundes eine monoaxial-zylindrische Struktur ist, von der die Ausrichtung der Längsachse (AX) bestimmt ist, eine Erfassung seismischer Daten des zweifach zweidimensionalen Typs durchgeführt wird, die allein in parallelen, STRIKE genannte, und rechtwinklige, DIP genannte, Richtungen zur Achse (AX) gegliedert ist.

**Claims**

1. A method for the exploration of a medium by seismic reflection, particularly adapted to a medium with a complex tectonics, to obtain parameters characterizing at least the stacking velocity field associated with reflector elements situated at the vertical to a given point (A) of the surface of the environment (S), said method consisting in building a common midpoint gather of seismic traces of which the common midpoint is said given point, subjecting the traces of this gather to dynamic and/or static corrections, and characterized in that the gather associated with the given point (A) is built by recording four common midpoint sub-gathers associated with said given point along four angular directions (1 to 4) passing through said given point, and dynamic and/or static corrections are applied to each of the four common midpoint sub-gathers in order to determine, for each sub-gather, a value of the curvature and/or the velocity optimizing the energy of the trace stack of the corrected sub-gather concerned, the four values thus obtained representing the components of the stacking velocity field desired for each of the reflector elements corresponding to the given point, and characterized by a vertical propagation time to with reflection for zero offset.

2. The method of Claim 1, characterized in that, from the four components of the stacking velocity field associated with one of said reflector elements, parameters are determined such as $\alpha$, $\tau$, $t^{\backslash\backslash}{}_p$ and $t^{\perp}{}_p$ characterizing the wavefront associated with said reflector element, $\alpha$ representing the azimuth of the highest curvature with respect to a predetermined reference direction, $t^{\backslash\backslash}{}_p$ and $t^{\perp}{}_p$ respectively denoting the inverse of the lowest and highest curvatures of the time representation as a function of offsets and azimuths, and $\tau$ denoting the transit time.

3. The method of Claim 1 or Claim 2, characterized in that the angular directions passing through the given point are such that two consecutive directions make an acute angle of between 40 and 50 degrees, and preferably of about 45 degrees.

4. The method of one of Claims 1 to 3, characterized in that it is applied to a plurality of given points constituting common midpoints, situated at the nodes of a regular-mesh grid, preferably in the form of a parallelogram.

5. The method of Claim 4, characterized in that the sub-gathers are acquired along lines coinciding with the sides or the diagonals of the parallelogram-shaped meshes forming the grid.

6. The method of Claim 5, for the construction of a three dimensional block of stacked traces, characterized in that, at each midpoint forming a node of the grid, a stacked trace is built by juxtaposing the trace portions centered on the $t_0$ values associated with the reflectors at the vertical to said midpoint, each trace portion centered on a value $t_0$ associated with a reflector being obtained by separately stacking each of the four sub-gathers of bi-dimensional traces associated with the midpoint and by selecting the portion centered on $t_0$ of the stacked trace corresponding to the energy peak.

7. The method of Claim 1, characterized in that, if the subsurface structure to be explored is a monoaxial cylindrical structure of which the direction of the longitudinal axis (AX) is determined, seismic data of the two times bidimensional series type are acquired only in the directions parallel called STRIKE and perpendicular called DIP to said axis (AX).

FIG_1

FIG_2

$$\underline{\text{FIG.3}}$$

FIG_4

FIG. 5

Ligne θ = 0
Indice tp
i₁

Ligne θ = π/4
Indice tp
i₂

Ligne θ = π/2
Indice tp

Ligne θ = 3π/4
Indice tp
i₃

t₁

t₂

t₃

t

t

t

t

FIG_6

FIG_7

FIG. 8